# EUROPEAN PATENT SPECIFICATION

(11) **EP 3 835 019 B1**
(45) Date of publication and mention of the grant of the patent: **03.05.2023**
(21) Application number: 20211506.9
(22) Date of filing: 03.12.2020
(51) Int. Cl.: B27M 1/08, B23Q 11/00, B23Q 17/09, B23Q 17/12, B23Q 17/24

(54) **MACHINE FOR WORKING WOODEN WORKPIECES PROVIDED WITH A MOBILE INTERFACE DEVICE, AND SYSTEM COMPRISING SAID MACHINE AND DEVICE**
MASCHINE ZUM BEARBEITEN VON HOLZWERKSTÜCKEN AUSGESTATTET MIT EINER MOBILEN SCHNITTSTELLENVORRICHTUNG UND SYSTEM, WELCHES DIESE MASCHINE UND VORRICHTUNG UMFASST.
MACHINE POUR L'USINAGE DE PIÈCES DE BOIS, FOURNIE AVEC UN APPAREIL À INTERFACE MOBILE ET LE SYSTÈME COMPRENANT LADITE MACHINE ET LEDIT APPAREIL.

(30) Priority: 11.12.2019 IT 201900023664
(43) Date of publication of application: 16.06.2021
(73) Proprietor: SCM Group S.p.A., 47921 Rimini (RN) (IT)
(72) Inventor: BELLATRECCIA, Dario, 47921 RIMINI (IT); CAIFFA, Luigi, 47921 RIMINI (IT); INGALDI, Carmine, 47921 RIMINI (IT)
(74) Representative: Tiburzi, Andrea

(56) References cited:
- DE-A1-102014 209 009
- DE-U1-202016 106 352
- KR-B1- 101 257 275
- US-A1- 2017 343 966
- US-B2- 10 046 429

## Description

The present invention relates to a machine for processing wooden pieces provided with a mobile interface device.

The present invention also relates to a mobile interface device, in particular to a mobile device by land or by air.

The present invention also relates to a system comprising said machine and device.

More specifically, the invention relates to a machine for working workpieces made of wood, glass, fiberglass, ceramic, plastic, metal, provided with a mobile interface device of the above type, designed and realized in particular to provide information to an operator regarding the machine operating status, but which can be used for any operator interface function.

In particular, the mobile interface device can be a ground-based mobile device, such as a rover bot, or an air moving mobile device, such as a drone.

In the following, the description will be addressed to a machine for machining wooden workpieces but it is very clear that it should not be considered limited to this specific use.

As is currently well known, a woodworking machine is equipped with a fixed control unit usually located on the machine, through which an operator can interact with the machine, modifying its operating parameters also based on the machining state of the machine and of the expendable materials it uses for operating.

Known machines, therefore, force an operator to be always near the machine and the control unit, in order to intervene promptly in the event of sudden failures or malfunctions, or in the event of the need to replace expendable materials.

Alternatively, devices that can be worn by an operator are known, such as augmented reality glasses, connected to the machines, on which data relating to the operation of the machine are projected, coming from the service center of the machine, also providing information to the operator about any faults or malfunctions.

However, these devices turn out to be an unwanted encumbrance for the operators as they are forced to wear them during the entire working time.

The relevant prior art includes also the patent applications US 2017/343966 A1 , KR 101 257 275 B, DE 20 2016 106352, and DE 102014209009 A1. US10046429B2 discloses the preamble of claim 1.

In light of the above, it is therefore an object of the present invention to equip a machine for working wooden workpieces with a mobile interface device for the interaction between the machine and the operator.

Another object of the invention is to provide a system for processing wooden workpieces, to be installed in a plant, comprising a machine and a mobile interface device for the detection of data and information concerning the plant and the display of said data and information for an operator.

The invention is set out in the appended claims.

Further according to the invention, said machine may comprise a logic control unit comprising the workpieces working programs, said logic control unit being operationally connected to said plurality of detecting devices for receiving said operating data, and being operationally connected to said mobile interface device for sending said operating data.

Preferably according to the invention, said plurality of detecting devices comprises a first sensor for detecting operating data, like vibration, of said working tools, a second sensor for detecting movement data, like acceleration, of said working tools, a third sensor for detecting electricity consumption of said machine, a fourth sensor for detecting operating data of eventual suction devices, a fifth sensor for detecting level data of expendable material, a camera for detecting the status of machine operation.

Still according to the invention, said mobile interface device comprises a display capable of displaying operating data, a laser pointer capable of providing indications to the operator concerning the relevant portions of said machine on which carrying out predetermined operations, a microphone capable of recording and processing further ambient sounds, an IR camera capable of carrying out a thermographic analysis of certain portions of said machine, remote user connection means, like a wireless connection module, in particular Bluetooth^{R}.

Always according to the invention, said mobile interface device is provided with ground moving means, like a rover bot.

Further according to the invention, said mobile interface device is provided with air moving means, like a drone.

Described is a mobile interface device that can be installed on a machine for working workpieces made of wood, glass, fiberglass, ceramic, plastic, metal, capable of receiving said machine operating data, characterized in that it comprises autonomous moving means, so as to be capable of moving autonomously in the plant where said machine is installed.

Preferably according to the invention, said device may comprise ground moving means, like a rover bot.

Still according to the invention, said device may comprise air moving means, like a drone.

Always according to the invention, said device may comprise a display capable of displaying data, a laser pointer capable of providing indications to the operator concerning the relevant portions of said machine on which carrying out predetermined operations, a microphone capable of recording and processing further ambient sounds, an IR camera capable of carrying out a thermographic analysis of certain portions of said machine, remote user connection means, like a wireless connection module, in particular Bluetooth^{R}.

It is further object of the present invention a system for working wooden workpieces comprising a machine according to any one of the preceding claims and a device according to any one of the preceding claims.

The present invention will be now described, for illustrative but not limitative purposes, according to its preferred embodiments, with particular reference to the figures of the enclosed drawings, wherein:
figure 1 shows a perspective view of the machine for working wooden workpieces provided with a mobile interface device, object of the present invention, in which said mobile interface device is in a first operative position; and
figure 2 shows a perspective view of the machine of figure 1, wherein said mobile interface device is in a second operating position.

In the various figures, similar parts will be indicated by the same reference numbers.

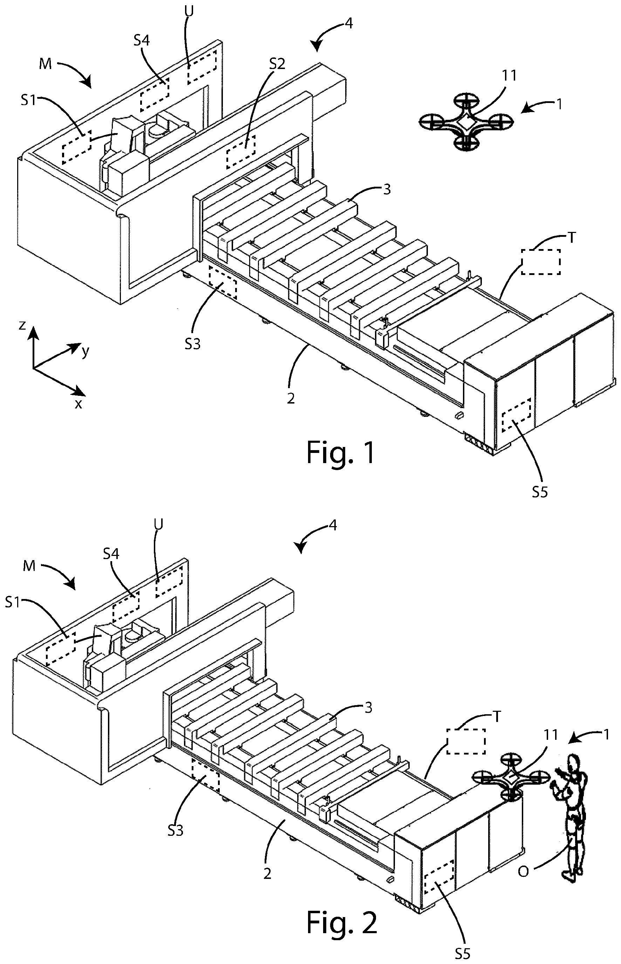

With reference to figure 1, the machine M for processing workpieces made of wood, glass, fiberglass, ceramic, plastic, metal, provided with a mobile interface device 1, object of the present invention, essentially comprises a base 2 for supporting the machine M on the ground, a working plane 3, for supporting the workpieces, a working unit 4, equipped with machining tools and movable along said base 2 according to a translation axis parallel to the X-axis of the Cartesian reference system XYZ, and a logic control unit U, containing programs for machining the workpiece.

Said machine M comprises a plurality of detecting devices S₁, S₂,..., Sₙ, T capable of detecting the operating data of said machine M.

Said plurality of detecting devices S₁, S₂,..., Sₙ, T is operatively connected with said logic control unit U and/or also with said mobile interface device 1.

Therefore, said plurality of detecting devices S₁, S₂,..., Sₙ, T is able to send said detected data to said mobile interface device 1, directly or by means of said logic control unit U.

In particular, said plurality of detecting devices S1, S2,..., Sn, T comprises the following sensors.

A first sensor S₁ for detecting the operating data of the machine M, such as, for example, the vibration of said machining tools, such as the electro-spindle.

A second sensor S₂ for detecting the displacement data, such as the acceleration, of said machining tools, defined as the calculation of the trajectory traveled by the operating group or the working unit 4.

A third sensor S₃ for detecting the electrical consumption of said machine M.

A fourth sensor S₄ for detecting the operating data of the suction device, not shown in the figure. The operating data of the suction device is of the binary type, i.e., "suction present" or "suction not present".

A fifth sensor S₅ for detecting the level data of the expendable material, such as glue pot, plugs pot, edge and the like.

A camera T for detecting the stack light status, namely the traffic light of the machine operation, not shown in the figure.

Said mobile interface device 1 is operatively connected to said plurality of detecting devices S₁, S₂,..., Sₙ, T, and/or to said logic control unit U.

Therefore, said mobile interface device 1 is capable of receiving said data directly from said plurality of detecting devices S₁, S₂,..., Sₙ, T or from said logic control unit U.

Said mobile interface device 1 is provided with a display 11 to display said received data.

Furthermore, said mobile interface device 1 comprises a laser pointer, not shown in the figure, to indicate to the operator O the relevant portions of the machine M on which to carry out certain operations.

Furthermore, said mobile interface device 1 comprises a microphone, not shown in the figure, for recording and processing further environmental sounds, such as for example the sounds produced by other working machines present in the plant, in which said machine M is installed.

Said mobile interface device 1 can therefore detect the operating status of other machines in the factory.

Furthermore, said mobile interface device 1 can also detect the operating status of other devices present in the factory, such as suction or compressed air generation systems.

Furthermore, said mobile interface device 1 comprises an infrared video camera, not shown in the figure, for carrying out the thermographic analysis of parts of said machine M subject to a temperature increase, such as the temperature of the tub containing the glue.

Finally, said mobile interface device 1 is provided with communication means, such as a wireless type connection module, in particular Bluetooth^{R}, for exchanging data and information, such as images or videos, with remote users, such as, for example, assistance centers.

Said mobile interface device 1 is provided with autonomous movement means, so as to be able to move autonomously in the plant in which said machine M is installed.

In a first embodiment, said mobile interface device 1 is provided with ground moving means, such as for example a rover bot.

In a second embodiment, said mobile interface device 1 is provided with moving means by air, such as for example a drone.

Said mobile interface device 1 is also able to autonomously lean on a portion of said machine M.

The plant, not shown in the figure, comprises said machine M, provided with said mobile interface device 11, and also further machining machines present in the factory.

The operation of the machine M provided with the mobile interface device 1 described above is as follows.

During the machining of the machine M according to a machining program contained in said logic control unit U, said plurality of detecting devices S₁, S₂, ..., Sₙ, T performs the detection of each of the respective operating data of said machine M described above.

Said data are sent to said mobile interface device 1 directly or by means of said logic control unit U.

Said data are shown on said display 11.

Said operator O can then view the operating data of the machine M and intervene on the machine M itself or on the operating program, on the basis of the data displayed.

Said data can also be forwarded to remote users, such as for example a service center, to keep the information relating to the machine M updated, by means of said wireless communication module, in particular Bluetooth^{R}.

Said mobile interface device 1 is able to move autonomously in the plant in which said machine M is installed and, being equipped with a microphone, it can also detect any anomalous noises coming from other machines or devices present in the plant and report any anomaly to the operator O.

As is evident from the above description, said machine M, by means of said mobile interface device 1, is capable of providing automated assistance to operator O.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for working workpieces made of wood, glass, fiberglass, ceramic, plastic, metal, comprising
a working plane (3), for supporting workpieces to be worked,
at least one working unit (4), provided with working tools, for working workpieces, slidably movable along said working plane (3),
a plurality of detecting devices (S₁, S₂, ..., Sₙ, T) capable of detecting the machine (M) operating data,
said machine (1) further comprising
a mobile interface device (1) operationally connected to said plurality of detecting devices (S₁, S₂, ..., Sₙ, T),
in that said mobile interface device (1) is capable of receiving and displaying said machine (M) operating data, so as to allow an operator (O) to intervene on the operation of the machine (M) itself, accordingly to the displayed data, and
**characterized**
**in that** said mobile interface device (1) is provided with autonomous movement means, so as to be able to move autonomously in the plant in which said machine (M) is installed.

2. Machine (1) according to the preceding claim, **characterized**
**in that** it comprises a logic control unit (U) comprising the workpieces working programs,
**in that** said logic control unit (U) is operationally connected to said plurality of detecting devices (S₁, S₂, ..., Sₙ, T) for receiving said operating data, and
**in that** said logic control unit (U) is operationally connected to said mobile interface device (1) for sending said operating data.

3. Machine (1) according to any one of the preceding claims, **characterized in that** said plurality of detecting devices (S₁, S₂, ..., Sₙ, T) comprises:
a first sensor (S₁) for detecting operating data, like vibration, of said working tools;
a second sensor (S₂) for detecting movement data, like acceleration, of said working tools;
a third sensor (S₃) for detecting electricity consumption of said machine (M);
a fourth sensor (S₄) for detecting operating data of eventual suction devices;
a fifth sensor (S₅) for detecting level data of expendable material;
a camera (T) for detecting the status of machine operation.

4. Machine (1) according to any one of the preceding claims, **characterized in that** said mobile interface device (4) comprises:
a display (11) capable of displaying operating data;
a laser pointer capable of providing indications to the operator (O) concerning the relevant portions of said machine (M) on which carrying out predetermined operations;
a microphone capable of recording and processing further ambient sounds;
an IR camera capable of carrying out a thermographic analysis of certain portions of said machine (M);
remote user connection means, like a wireless connection module, in particular BluetoothR.

5. Machine (1) according to any one of the preceding claims, **characterized in that** said mobile interface device (1) is provided with ground moving means, like a rover bot.

6. Machine (1) according to any one of the preceding claims, **characterized in that** said mobile interface device (1) is provided with air moving means, like a drone.

7. System for working wooden workpieces comprising a machine (M) according to any one of claims 1-6.

## Patentansprüche

1. Maschine (M) zur Bearbeitung von Werkstücken aus Holz, Glas, Fiberglas, Keramik, Kunststoff, Metall, das eine Arbeitsebene (3) zur Unterstützung der zu bearbeitenden Werkstücke umfasst,
mindestens eine mit Arbeitswerkzeugen versehene Arbeitseinheit (4) zur Bearbeitung
von Werkstücken, die entlang der Arbeitsebene (3) verschiebbar ist, eine Vielzahl von Geräten (S₁, S₂, ... Sₙ, T), die die Betriebsdaten der Maschine (M) erfassen können, die besagte Maschine (1) umfasst ferner
ein mobiles Schnittstellengerät (1), das mit der Vielzahl von Erfassungsgeräten (S₁, S₂, ..., Sₙ, T) betriebsbereit verbunden ist,
wodurch das mobile Gerät (1) in der Lage ist, die Betriebsdaten der Maschine (M) zu empfangen und anzuzeigen, so dass ein Bediener (O)
in den Betrieb der Maschine (M) selbst eingreifen kann, und zwar in Abhängigkeit von den angezeigten Daten, und
**dadurch gekennzeichnet, dass** das mobile Gerät (1) mit autonomen Bewegungsmitteln ausgestattet ist, um sich autonom in der Anlage, in der die besagte Maschine (M) installiert ist, bewegen zu können.

2. Maschine (1) nach dem vorhergehenden Anspruch, **dadurch gekennzeichnet dass** sie eine logische Steuereinheit (U) umfasst, die die Arbeitsprogramme für die Werkstücke enthält,
dass die besagte logische Steuereinheit (U) operativ mit der besagten Vielzahl von Erfassungsgeräten (S₁, S₂, ..., Sₙ, T) verbunden ist, um die besagten Betriebsdaten zu empfangen, und
dass die besagte logische Steuereinheit (U) operativ mit der besagten mobilen Gerät (1) zum Senden der besagten Betriebsdaten verbunden ist.

3. Maschine (1) nach einem der vorhergehenden Ansprüche, **dadurch gekennzeichnet, dass** die Vielzahl von Geräten (S₁, S₂, ..., Sₙ, T)
Folgendes umfasst:
einen ersten Sensor (S₁) zur Erfassung von Betriebsdaten, wie z. B. Vibrationen, der besagten Arbeitsgeräte; einen zweiten Sensor (S₂) zur Erfassung von Bewegungsdaten, wie z.B. der Beschleunigung,
der genannten Arbeitsgeräte;
einen dritten leitenden Ring (S₃) zur Erfassung des Stromverbrauchs der Maschine (M);
einen vierten Sensor (S₄) zur Erfassung von Betriebsdaten eventueller Absauggeräte;
einen fünften Sensor (S₅) zur Erfassung von Füllstandsdaten des Verbrauchsmaterials; eine Kamera (T) zur Erfassung des Betriebszustands der Maschine.

4. Maschine (1) nach einem der vorhergehenden Ansprüche, **dadurch gekennzeichnet, dass** das mobile Gerät (4) eine Schnittstelle umfasst:
ein Display (11), dass die Betriebsdaten anzeigt;
einen Laserpointer, der in der Lage ist, dem Bediener (O) die betreffenden Teile der Maschine (M) zu geben, an denen vorbestimmte Arbeiten ausgeführt werden;
ein Mikrofon, das ferner Umgebungsgeräusche aufnehmen und verarbeiten kann;
eine IR-Kamera, die in der Lage ist, eine thermografische Analyse bestimmter Teile der Maschine (M) durchzuführen;
Mittel zur Fernverbindung, wie ein drahtloses Verbindungsmodul, insbesondere BluetoothR.

5. Maschine (1) nach einem der vorhergehenden Ansprüche, **dadurch gekennzeichnet, dass** das besagte mobile Schnittstellengerät (1) mit Bodenbewegungsmitteln, wie einen Rover-Bot, ausgestattet ist.

6. Maschine (1) nach einem der vorhergehenden Ansprüche, **dadurch gekennzeichnet, dass** das mobile Schnittstellengerät (1) mit Flugmitteln, wie eine Drohne, ausgestattet ist.

7. System zur Bearbeitung von Holzwerkstücken, das eine Maschine (M) nach einem der folgenden Ansprüche 1-6 umfasst.

## Revendications

1. Machine (M) pour travailler des pièces en bois, verre, fibre de verre, céramique, plastique, métal, comprenant un plan de travail (3), pour supporter les pièces à travailler, au moins une unité de travail (4), pourvue d'outils de travail, pour travailler les pièces à usiner, déplaçable de façon coulissante le long dudit plan de travail (3), une pluralité de dispositifs de détection (S₁, S₂, ..., Sₙ, T) capables de détecter les données de fonctionnement de la machine (M), ladite machine (1) comprend en outre un dispositif d'interface mobile (1) connecté de manière opérationnelle à ladite pluralité de dispositifs de détection (S₁, S₂, ..., Sₙ, T), ledit dispositif d'interface mobile (1) est capable de recevoir et d'afficher lesdites données de fonctionnement de la machine (M), afin de permettre à un opérateur (O) d'intervenir sur le fonctionnement de la machine (M) elle-même, en fonction des données affichées, et **caractérisée en ce que** ledit dispositif d'interface mobile (1) est pourvu de moyens de déplacement autonomes, de manière à pouvoir se déplacer de manière autonome dans l'installation dans laquelle ladite machine (M) est installée.

2. Machine (1) selon la revendication précédente, **caractérisée par le fait qu'**elle comprend une unité de commande logique (U) comprenant les programmes de travail des pièces, ladite unité de commande logique (U) est connectée opérationnellement à ladite pluralité de dispositifs de détection (S₁, S₂, ...,Sₙ, T) pour recevoir lesdites données de fonctionnement, et ladite unité de commande logique (U) est connectée de manière opérationnelle audit dispositif d'interface mobile (1) pour envoyer lesdites données de fonctionnement.

3. Machine (1) selon l'une quelconque des revendications précédentes, **caractérisée en ce que** ladite pluralité de dispositifs de détection (S₁, S₂, ..., Sₙ, T) comprend:
un premier capteur (S₁) pour détecter les données de fonctionnement, comme les vibrations, de ces outils de travail;
un deuxième capteur (S₂) pour détecter les données de mouvement, comme l'accélération, de ces outils de travail;
un troisième capteur (S₃) pour détecter la consommation d'électricité de ladite machine (M);
un quatrième capteur (S₄) pour détecter les données de fonctionnement d'éventuels dispositifs d'aspiration;
un cinquième capteur (S₅) pour détecter les données de niveau des matériaux consommables;
une caméra (T) pour détecter l'état de fonctionnement de la machine.

4. Machine (1) selon l'une quelconque des revendications précédentes,
**caractérisée en ce que** ledit dispositif d'interface mobile (4) comprend:
un écran (11) capable d'afficher des données de fonctionnement;
un pointeur laser capable de fournir des indications à l'opérateur (O) concernant les parties pertinentes de ladite machine (M) sur lesquelles effectuer des opérations prédéterminées;
un microphone capable d'enregistrer et de traiter d'autres sons ambiants;
une caméra IR capable d'effectuer une analyse thermographique de certaines parties de ladite machine (M) ;
des moyens de connexion à l'utilisateur à distance, comme un module de connexion sans fil, en particulier BluetoothR.

5. Machine (1) selon l'une quelconque des revendications précédentes, **caractérisée par le fait que** ledit dispositif d'interface mobile (1) est doté de moyens de déplacement au sol, tels qu'un robot rover.

6. Machine (1) selon l'une quelconque des revendications précédentes, **caractérisée en ce que** ledit dispositif d'interface mobile (1) est pourvu de moyens de déplacement aérien, comme un drone.

7. Système de traitement de pièces en bois comprenant une machine (M) selon l'une quelconque des revendications 1 à 6.
